# EUROPEAN PATENT SPECIFICATION

(11) **EP 4 459 784 B1**
(45) Date of publication and mention of the grant of the patent: **27.05.2026**
(21) Application number: 21969461.9
(22) Date of filing: 29.12.2021
(51) Int. Cl.: H01M 50/574, H01M 50/578, H01M 50/581, H01M 50/583, H01M 10/058, H01M 50/186, H01M 10/42, H01M 50/595

(54) **BATTERY AND ELECTRONIC APPARATUS**
BATTERIE UND ELEKTRONISCHE VORRICHTUNG
BATTERIE ET APPAREIL ÉLECTRONIQUE

(43) Date of publication of application: 06.11.2024
(73) Proprietor: Ningde Amperex Technology Limited, Ningde, Fujian 352100 (CN)
(72) Inventor: ZHANG, Jinming, Ningde, Fujian 352100 (CN); YU, Yangyang, Ningde, Fujian 352100 (CN)
(74) Representative: Dehns Germany Partnerschaft mbB
(86) International application number: PCT/CN2021/142620
(87) International publication number: WO 2023/123093

(56) References cited:
- EP-A1- 2 515 358
- CN-A- 110 071 255
- CN-U- 206 194 899
- US-A1- 2011 086 242
- US-A1- 2013 130 065
- US-A1- 2015 064 502
- US-A1- 2015 064 519

## Description

### TECHNICAL FIELD

Embodiments of this application relate to the technical field of electrochemical apparatuses, and in particular, to a battery and an electronic apparatus.

### BACKGROUND

To prevent damage caused by abnormal temperature, charging and discharging voltage, or charging and discharging current, batteries are equipped with a protective means. In the foregoing abnormal conditions, the protective means disconnects the circuit of the battery to protect the battery. However, the connection structure between the existing protective means and the battery cell is not stable enough. Prior art connection structures are disclosed in documents EP 2 515 358 A1, US2015/064502 A1, US2011/086242 A1 and CN 206 194 899 U.

### SUMMARY

To solve the main technical problem, embodiments of this application provide a battery and an electronic apparatus, so as to make connection of a protective means more stable.

To solve the foregoing technical problem, one technical solution used in this application is to provide a battery, where the battery includes a housing, a first adhesive member, a protective means, a first tab, and a second adhesive member. The housing defines an accommodating cavity, where the housing includes a first surface and a second surface located outside the accommodating cavity, and the first surface is separated from the second surface. The first adhesive member includes a first adhesive surface and a second adhesive surface disposed opposite each other, where the first adhesive surface is adhered to the first surface. The protective means is adhered to the second adhesive surface, where the protective means includes a body portion and a first connection portion electrically connected to the body portion. The first tab includes a second connection portion located outside the accommodating cavity, where the second connection portion is electrically connected to the first connection portion, and the two are combined to form a first combination portion, the first combination portion being adhered to the second adhesive surface. The second adhesive member includes a first portion and a second portion connected to each other, where the first portion is adhered to the second surface, and the second portion is adhered to a surface of the first combination portion facing away from the first adhesive member. In this solution, the structure where the second adhesive member is adhered to the surface of the first combination portion facing away from the second adhesive surface can prevent the first combination portion from falling off the second adhesive surface. In addition, the structure where the first portion of the second adhesive member is adhered to the first surface and the second portion is adhered to the surface of the first combination portion facing away from the second adhesive surface is more convenient for positioning of the second portion, allowing the second portion to be adhered to a target position more accurately.

In a further embodiment, the housing includes a side edge portion, where the side edge portion includes the first surface and the second surface, and in a thickness direction of the side edge portion, the first surface is disposed opposite the second surface. In this solution, the protective means can make full use of the remaining space at the position of the side edge portion, thereby increasing energy density of the battery. In addition, the protective means is closer to the first tab, which facilitates the electrical connection between the protective means and the first tab. When the first surface is disposed opposite the second surface, because the second surface is farther away from the protective means, the process of adhering the second adhesive member to the second surface is more convenient. Especially when the second adhesive member is adhered by an automation device, the path along which the second adhesive member is adhered to the second surface does not interfere with the position of the protective means, which is more conducive to compilation of automation programs. Moreover, the first portion of the second adhesive member has a larger arrangement space and stronger adhesion force. In addition, when the second adhesive member is bent so that the second portion is adhered to the surface of the first combination portion facing away from the second adhesive surface, the second adhesive member also covers an end edge of the side edge portion, improving the sealing effect of the housing.

In a further embodiment, the side edge portion includes an end edge located between the first surface and the second surface, a portion of the first tab extending out of the end edge is an extension portion, the extension portion includes the second connection portion, and the extension portion is bent so that the second connection portion is adhered to the second adhesive surface. The first connection portion is connected to a surface of the second connection portion facing away from the second adhesive surface. In this solution, the second connection portion being adhered to the second adhesive surface facilitates processing. This is because the step of adhering the second connection portion to the second adhesive surface can be completed in the process of processing the battery cell body, and this adhering step does not require the participation of the protective means.

In a further embodiment, the second adhesive member includes a third portion, the third portion having one end connected to the first portion and another end connected to the second portion. The third portion is attached to the end edge or spaced apart from the end edge. In this solution, when the third portion is attached to the end edge, the sealing effect can be improved. When the third portion is spaced apart from the end edge, a certain margin can be provided for the second portion, facilitating the adhering of the second portion.

In a further embodiment, the third portion and the second portion jointly cover the extension portion. In this solution, safety performance is improved, preventing the extension portion from coming into contact with other components to cause short circuit or electric leakage.

In a further embodiment, the second portion covers the first combination portion. In this solution, the protective effect on the first combination portion is improved.

In a further embodiment, at least a portion of the second portion is adhered to the second adhesive surface. In this solution, the adhering effect of the second portion is improved.

In a further embodiment, in a direction from the body portion to the first combination portion, the second portion includes a first side edge facing away from the body portion and a second side edge facing towards the body portion. In the direction from the body portion to the first combination portion, the first combination portion includes a third side edge facing away from the body portion and a fourth side edge facing towards the body portion. In the direction from the body portion to the first combination portion, a distance H1 between the first side edge and the third side edge satisfies 7 mm ≤ H1 ≤ 12 mm, and a portion of the second adhesive member extending beyond the first combination portion is adhered to the second adhesive surface; and/or in the direction from the body portion to the first combination portion, a distance H2 between the second side edge and the fourth side edge satisfies 7 mm ≤ H2 ≤ 12 mm, and the portion of the second adhesive member extending beyond the first combination portion is adhered to the second adhesive surface. This solution makes the second portion less prone to fall off the second adhesive surface.

In a further embodiment, the housing further includes a third surface, where the third surface is connected to a side edge of the first surface facing away from the end edge, and the third surface intersects with the first surface at an angle. The second portion is bent to be adhered to the third surface. In this solution, the adhering effect of the second portion is improved.

In a further embodiment, in the direction from the body portion to the first combination portion, the first adhesive member includes a fifth side edge facing away from the body portion, the fifth side edge being located on a side of the first side edge facing away from the body portion. In this solution, a side edge of the second portion is prevented from warping.

In a further embodiment, the protective means further includes a third connection portion, where the third connection portion is electrically connected to a side of the body portion facing away from the first connection portion, and the third connection portion has a different polarity than the first connection portion. The battery further includes an electrical connection portion, where the electrical connection portion includes a fourth connection portion, and the fourth connection portion is electrically connected to the third connection portion and combined with the third connection portion to form a second combination portion, the second combination portion being adhered to the second adhesive surface. The battery further includes a third adhesive member, where the third adhesive member includes a fourth portion and a fifth portion connected to each other, the fourth portion is adhered to the second surface, and the fifth portion is adhered to a surface of the second combination portion facing away from the first adhesive member. In this solution, good adhering and fixing effects can be achieved for the second combination portion.

In a further embodiment, the fifth portion covers the second combination portion. In this solution, the protective effect on the second combination portion is improved.

In a further embodiment, in a direction from the body portion to the second combination portion, the fifth portion includes a sixth side edge facing away from the body portion and a seventh side edge facing towards the body portion. In the direction from the body portion to the second combination portion, the second combination portion includes an eighth side edge facing away from the body portion and a ninth side edge facing towards the body portion. In the direction from the body portion to the second combination portion, a distance H3 between the sixth side edge and the eighth side edge satisfies 7 mm ≤ H3 ≤ 12 mm, and a portion of the third adhesive member extending beyond the second combination portion is adhered to the second adhesive surface; and/or in the direction from the body portion to the second combination portion, a distance H4 between the seventh side edge and the ninth side edge satisfies 7 mm ≤ H4 ≤ 12 mm, and the portion of the third adhesive member extending beyond the second combination portion is adhered to the second adhesive surface. This solution makes the third adhesive member less prone to fall off the second adhesive surface.

In a further embodiment, the housing further includes a third surface, where the third surface is connected to a side edge of the first surface facing away from the accommodating cavity, and the third surface intersects with the first surface at an angle. The fifth portion is bent to be adhered to the third surface. This solution improves the adhering effect of the fifth portion.

In a further embodiment, in the direction from the body portion to the second combination portion, the first adhesive member includes a tenth side edge facing away from the body portion, the sixth side edge being located on a side of the tenth side edge facing away from the body portion. In this solution, the adhering effect of the fifth portion is better.

In a further embodiment, the first portion is connected to the fourth portion, and the second adhesive member and the third adhesive member are integrally disposed. In this solution, the adhering processes of the second adhesive member and the third adhesive member are reduced.

In a further embodiment, the second portion is connected to the fifth portion, and the second adhesive member and the third adhesive member are integrally disposed. In this solution, the adhering processes of the second adhesive member and the third adhesive member are reduced.

In a further embodiment, the second portion and the fifth portion jointly cover the second adhesive surface. This solution improves the protective effect of the second adhesive member and the third adhesive member.

In a further embodiment, in a direction from the body portion to the first combination portion, the second portion extends beyond the first adhesive member. In a direction from the body portion to the second combination portion, the fifth portion extends beyond the first adhesive member. This solution further improves the protective effect of the second adhesive member and the third adhesive member.

A second aspect of this application further provides an electronic apparatus including the battery according to any one of the foregoing embodiments.

In the battery provided in this application, the first adhesive surface of the first adhesive member is adhered to the first surface of the housing, and the opposite second adhesive surface is used for adhering the protective means. In addition, this application provides the second adhesive member. Particularly, in this application, the first portion of the second adhesive member is adhered to the second surface separated from the first surface, and the second portion of the second adhesive member is adhered to the surface of the first combination portion facing away from the second adhesive surface. The structure where the second adhesive member is adhered to the surface of the first combination portion facing away from the second adhesive surface can prevent the first combination portion from falling off the second adhesive surface. In addition, the structure where the first portion of the second adhesive member is adhered to the first surface and the second portion is adhered to the surface of the first combination portion facing away from the second adhesive surface is more convenient for positioning of the second portion, allowing the second portion to be adhered to a target position more accurately.

### BRIEF DESCRIPTION OF DRAWINGS

To describe the technical solutions in some embodiments of this application more clearly, the following briefly describes the accompanying drawings required for describing some embodiments of this application. Apparently, the accompanying drawings described below show merely some embodiments of this application, and persons of ordinary skill in the art may still derive other drawings from the accompanying drawings without creative efforts.
FIG. 1 is a schematic front view of a battery according to a first embodiment of this application;
FIG. 2 is a schematic side view of the battery according to the first embodiment of this application;
FIG. 3 is a schematic front view of a side edge portion and components thereon according to the first embodiment of this application, where a second adhesive member is removed;
FIG. 4 is a schematic front view of the side edge portion and components thereon according to the first embodiment of this application;
FIG. 5 is a schematic cross-sectional view of the side edge portion and components thereon at M-M in FIG. 4;
FIG. 6 is a schematic exploded cross-sectional view of the side edge portion and components thereon at M-M in FIG. 4;
FIG. 7 is a schematic cross-sectional view of a side edge portion and components thereon according to a second embodiment of this application;
FIG. 8 is a schematic front view of a side edge portion and components thereon according to a third embodiment of this application;
FIG. 9 is a partially enlarged schematic diagram at A in FIG. 8;
FIG. 10 is a schematic front view of a side edge portion and components thereon according to a fourth embodiment of this application, where a positional relationship between a third connection portion and a fourth connection portion behind a third adhesive member is shown;
FIG. 11 is a partially enlarged schematic diagram at B in FIG. 10;
FIG. 12 is a schematic front view of the side edge portion and components thereon according to the fourth embodiment of this application;
FIG. 13 is a schematic cross-sectional view of the side edge portion and components thereon at N-N in FIG. 12;
FIG. 14 is a schematic rear view of a side edge portion and components thereon according to a fifth embodiment of this application;
FIG. 15 is a schematic rear view of a side edge portion and components thereon according to a sixth embodiment of this application;
FIG. 16 is a schematic front view of a side edge portion and components thereon according to a seventh embodiment of this application; and
FIG. 17 is a schematic rear view of the side edge portion and components thereon according to the seventh embodiment of this application.

### DETAILED DESCRIPTION

For ease of understanding of this application, the following further describes this application in detail with reference to the accompanying drawings and specific embodiments. It should be noted that when an element is referred to as being "fixed to" another element, it may be directly fixed to the another element, or there may be one or more elements therebetween. When an element is referred to as being "connected to" another element, it may be directly connected to the another element, or there may be one or more elements therebetween. The terms "perpendicular", "horizontal", "left", "right", and similar expressions used herein are merely for description purposes.

Unless otherwise defined, all technical and scientific terms used herein shall have the same meanings as commonly understood by persons skilled in the art to which this application belongs. The terms used in the specification of this application are for description of specific embodiments only without any intention to limit this application. The term "and/or" used herein includes any and all combinations of one or more associated items listed.

An existing protective means includes a body portion and two connection portions with different polarities that are both electrically connected to the body portion, where one connection portion is electrically connected to one tab of an electrode assembly in a battery, and the other connection portion is connected to a conductive sheet. The conductive sheet is configured to be electrically connected to an external circuit to lead out electric energy in the battery. When the body portion detects an abnormal ambient temperature of the battery or abnormal voltage or current during charging and discharging of the battery, an open circuit is formed in the body portion of the protective means, such that the current between the two connection portions connected to the body portion cannot be conducted, thereby causing the battery to be disconnected from the external circuit, and in turn protecting the battery.

The applicant has found that the existing protective means is adhered to a housing of the battery. However, after the battery is used for a period of time, the protective means is prone to fall off an adhesive component due to aging of the adhesive component. After the protective means falls off the housing, when the battery experiences vibration, the vibration of the protective means is transferred to the connection portion between the protective means and the tab, which easily leads to the disconnection of the protective means from the tab of the battery, thereby causing an open circuit in the battery.

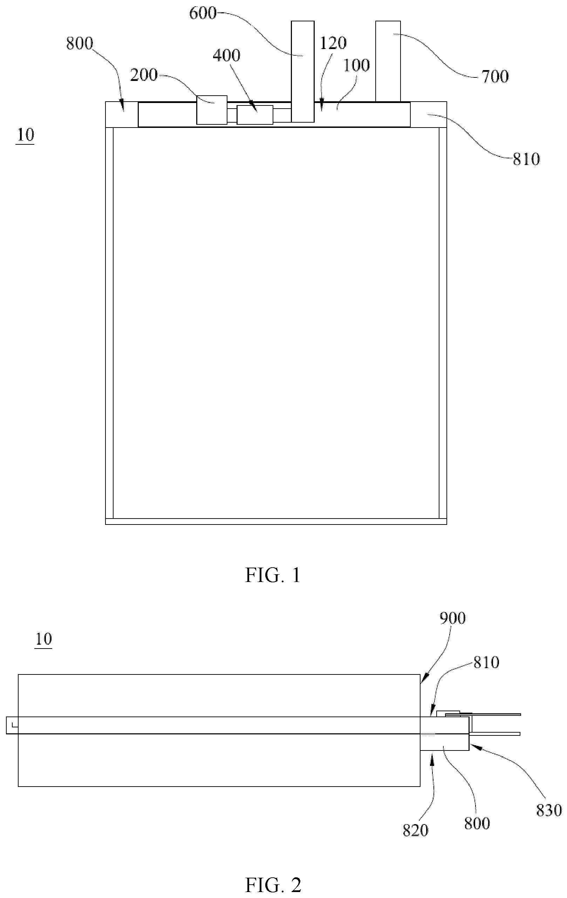

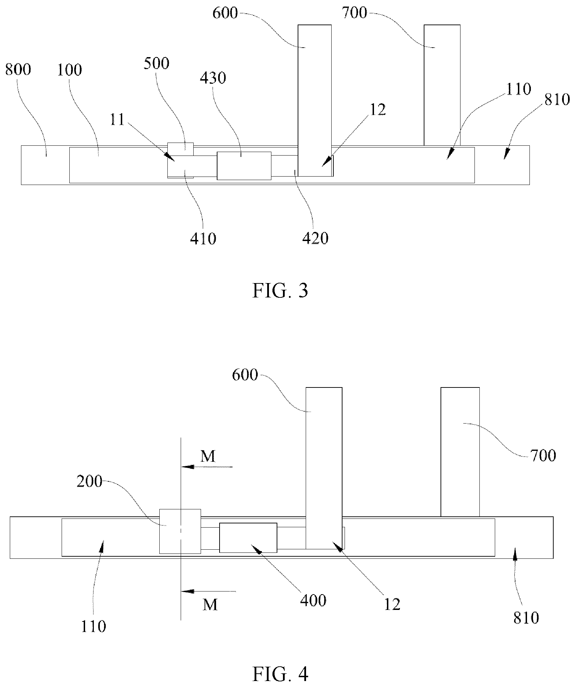

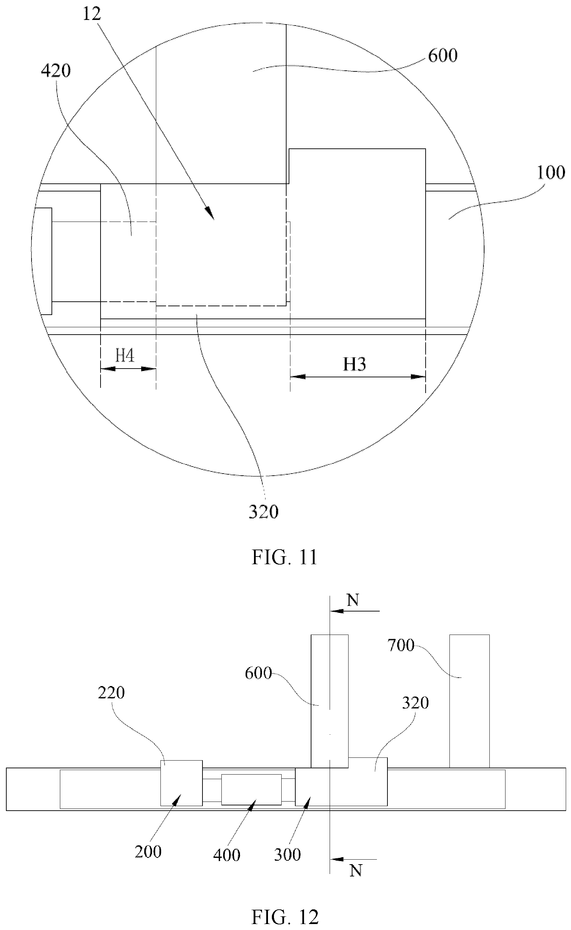

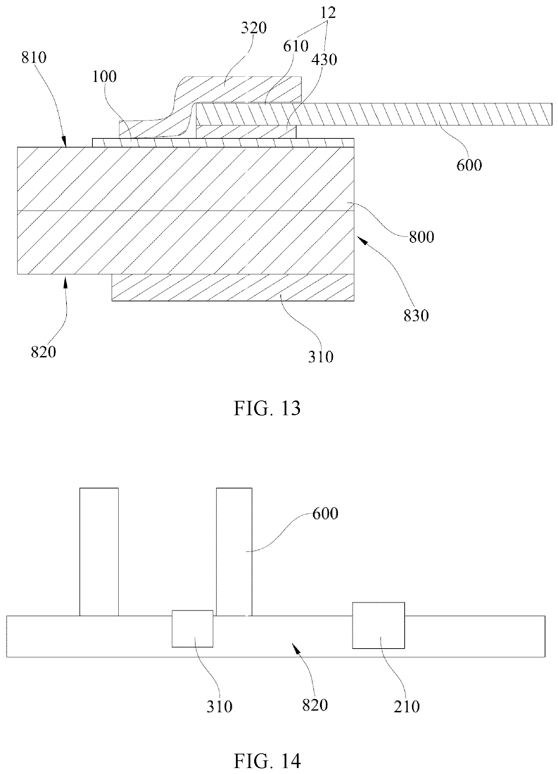

In view of this, referring to FIG. 1 to FIG. 17, these embodiments provide a battery 10, where the battery 10 can improve stability of a connection structure of a protective means 400. Specifically, the battery 10 includes a housing, a first adhesive member 100, a protective means 400, an electrode assembly, and a second adhesive member 200.

The housing defines an accommodating cavity, and the electrode assembly and an electrolyte are disposed in the accommodating cavity. The housing includes a first surface 810 and a second surface 820 located outside the accommodating cavity, and the first surface 810 is separated from the second surface 820. The first surface 810 and the second surface 820 may be two separated surfaces at any positions outside the housing. It should be noted that the first surface 810 being separated from the second surface 820 means that the two surfaces have no overlapping portion, and the first surface 810 and the second surface 820 may be adjacent or spaced apart. When the first surface 810 and the second surface 820 are spaced apart, the first surface 810 and the second surface 820 may be non-adjacent surfaces at two different positions outside the housing (relative to the accommodating cavity) or two spaced-apart regions on one surface of the housing. When the first surface 810 and the second surface 820 are adjacent, the first surface 810 and the second surface 820 may be adjacent surfaces at two different positions outside the housing or two adjacent surfaces on a same surface outside the housing.

The first adhesive member 100 includes a first adhesive surface 110 and a second adhesive surface 120 disposed opposite each other. In other words, the first adhesive member 100 is a double-sided adhesive. The first adhesive surface 110 of the first adhesive member 100 is adhered to the first surface 810 of the housing. In other words, a surface of the housing adhered to the first adhesive surface 110 is the first surface 810.

The protective means 400 is adhered to the second adhesive surface 120, that is, at least a portion of the protective means 400 is adhered to the second adhesive surface 120. The protective means 400 includes a body portion 430, and a first connection portion 410 and a third connection portion 420 that are both electrically connected to the body portion 430. The first connection portion 410 and the third connection portion 420 have different polarities.

The electrode assembly is provided in the accommodating cavity of the housing, and the electrode assembly includes at least two tabs with different polarities, where the two tabs are a first tab 500 and a second tab 700. The first tab 500 may be a positive electrode tab or a negative electrode tab. For ease of description, in the following embodiments, the first tab 500 being a positive electrode tab of the electrode assembly and the second tab 700 being a negative electrode tab is used as an example for description.

The first tab 500 extends out of the housing, the first tab 500 includes an extension portion 510 located outside the accommodating cavity, and the extension portion 510 includes a second connection portion 511. In other words, all portions of the first tab 500 located outside the accommodating cavity are the extension portion 510, and the second connection portion 511 is a portion of the extension portion 510, and specifically a portion for being connected to the first connection portion 410. The second connection portion 511 is electrically connected to the first connection portion 410, and the two are combined to form a first combination portion 11, the first combination portion 11 being adhered to the second adhesive surface 120. In other words, the first combination portion 11 includes the first connection portion 410 and the second connection portion 511, and an entirety formed by combining the two is adhered to the second adhesive surface 120. Specifically, in an embodiment, the first connection portion 410 and the second connection portion 511 may be combined to form the first combination portion 11 after connected outside the second adhesive surface 120, and then bent to be adhered to the second adhesive surface 120. The connection form of the first connection portion 410 and the second connection portion 511 is not limited in this embodiment, and the two may specifically be welded. In other embodiments, the two may be bolted or adhered using a conductive adhesive.

When the first combination portion 11 is adhered to the second adhesive surface 120, the first connection portion 410 may be adhered to the second adhesive surface 120, and the second connection portion 511 may be connected to a surface of the first connection portion 410 facing away from the second adhesive surface 120. Alternatively, the second connection portion 511 may be adhered to the second adhesive surface 120, and the first connection portion 410 may be connected to a surface of the second connection portion 511 facing away from the second adhesive surface 120. Alternatively, both the first connection portion 410 and the second connection portion 420 are adhered to the second adhesive surface 120, with the two being connected to each other. The connection manner of the first connection portion 410 and the second connection portion 511 may be determined based on actual needs. In this embodiment, the first connection portion 410 and the second connection portion 511 are welded.

The second adhesive member 200 has a third adhesive surface 240, and the second adhesive member 200 includes a first portion 210 and a second portion 220 connected to each other. Both the first portion 210 and the second portion 220 have a portion of the third adhesive surface 240. The second adhesive member 200 may include only the first portion 210 and the second portion 220, or may also include another portion different from the first portion 210 and the second portion 220. When the second adhesive member 200 further includes another portion, the additional portion may be connected to a side of the first portion 210 facing away from the second portion 220, may be connected to a side of the second portion 220 facing away from the first portion 210, or may be connected between the first portion 210 and the second portion 220. In other words, the first portion 210 and the second portion 220 may not be directly connected, but are indirectly connected via the additional portion of the second adhesive member 200 other than the first portion 210 and the second portion 220.

Particularly, in this embodiment, the first portion 210 of the second adhesive member 200 is adhered to the second surface 820, and the second portion 220 is adhered to a surface of the first combination portion 11 facing away from the first adhesive member 100. In other words, in this embodiment, the second adhesive member 200 is also additionally adhered to the surface of the first combination portion 11 facing away from the first adhesive member 100, and the second adhesive member 200 is adhered to at least the second surface 820 outside the first adhesive member 100.

In conclusion, in the battery 10 provided in this embodiment, he first adhesive surface 110 of the first adhesive member 100 is adhered to the first surface 810 of the housing, and the opposite second adhesive surface 120 is used for adhering the protective means 400. In addition, this application provides the second adhesive member 200. Particularly, in this application, the first portion 210 of the second adhesive member 200 is adhered to the second surface 820 separated from the first surface 810, and the second portion 220 of the second adhesive member 200 is adhered to the surface of the first combination portion 11 facing away from the second adhesive surface 120.

The structure where the second adhesive member 200 is adhered to the surface of the first combination portion 11 facing away from the second adhesive surface 120 can prevent the first combination portion 11 from falling off the second adhesive surface 120. In addition, the structure where the first portion 210 of the second adhesive member 200 is adhered to the second surface 820 and the second portion 220 is adhered to the surface of the first combination portion 11 facing away from the second adhesive surface 120 is more convenient for positioning of the second portion 220, allowing the second portion 220 to be adhered to a target position more accurately. The second adhesive surface 120 is sticky. Therefore, if the second adhesive member 200 is adhered to only the surface of the first combination portion 11 facing away from the second adhesive surface 120, once the second adhesive member 200 is adhered to the second adhesive surface 120 out of alignment, it is difficult for the second adhesive member 200 to be removed from the second adhesive surface 120, or the first adhesive member 100 is pulled during the removal of the second adhesive member 200, causing the first adhesive member 100 to fall off the housing of the battery cell. In this application, the second adhesive member 200 can be adhered to the second surface 820 first, and then adhered to the surface of the first combination portion 11 facing away from the second adhesive surface 120, such that during the process of adhering the second adhesive member 200 to the surface of the first combination portion 11 facing away from the second adhesive surface 120, the second adhesive member 200 can be adhered more accurately due to the positioning by the second surface 820, making it less prone to adhesion misalignment.

The applicant has found that when the second adhesive member 200 is used to be adhered to only the surface of the first combination portion 11 facing away from the first adhesive member 100, if the second adhesive member 200 is adhered manually, it is difficult for the second adhesive member 200 to be accurately adhered to the target adhesion position, or the second adhesive member 200 needs to be adhered twice or even three times. When the second adhesive member 200 is inadvertently adhered to a position on the second adhesive surface 120 that is originally not ready for adhesion, because the second adhesive surface 120 is also sticky, it is difficult for the second adhesive member 200 to be removed for secondary adhesion.

When the second adhesive member 200 is used to be adhered to only the surface of the first combination portion 11 facing away from the first adhesive member 100, if the second adhesive member 200 is adhered by an automation device, because the wall surface of the first combination portion 11 facing away from the first adhesive member 100 is not necessarily flat, it is difficult to accurately adhere the second adhesive member 200 to the target adhesion position while ensuring that the second adhesive member 200 is tightly adhered to the wall surface of the first combination portion 11 facing away from the first adhesive member 100, and the processing device costs are high.

With the structure in this embodiment, after the second adhesive member 200 is adhered to the second surface 820 of the housing, the issue related to the adhesion position does not need to be considered in the process of adhering the second adhesive member 200 to the surface of the first combination portion 11 facing away from the first adhesive member 100. Since the second adhesive member 200 is accurately adhered to the position on the second surface 820, the subsequent adhesion position of the second adhesive member 200 is relatively accurate. This makes it very convenient whether the second adhesive member 200 is adhered manually or by an automation device.

To prevent the protective means 400 from occupying too much effective space of the battery 10, referring to FIG. 1 to FIG. 6, in an embodiment, the housing includes a side edge portion 800, where the side edge portion 800 includes the first surface 810 and second surface 820 in the foregoing embodiments. In a thickness direction of the side edge portion 800, the first surface 810 is disposed opposite the second surface 820. The side edge portion 800 of the housing may be a side edge of the housing for packaging. When two portions can be used to fit together to define the accommodating cavity, the housing has four side edges. To increase energy density of the battery 10, a side edge of the housing is folded. However, the side edge portion 800 in this application is a side edge of the housing that is not folded.

The first tab 500 of the battery 10 extends out of the accommodating cavity from one side edge of the housing. Therefore, the side edge through which the first tab 500 passes is not folded, so the side edge portion 800 may be the side edge of the battery 10 out of which the first tab 500 extends. In this structure, the protective means 400 can make full use of the remaining space at the position of the side edge portion 800, thereby increasing the energy density of the battery 10. In addition, the protective means 400 is closer to the first tab 500, which facilitates the electrical connection between the protective means 400 and the first tab 500. Certainly, in other embodiments, the side edge portion 800 may alternatively be a side edge of the housing other than the side edge out of which the first tab 500 extends.

When the side edge portion 800 has the first surface 810 and the second surface 820, and the first surface 810 is disposed opposite the second surface 820 in a thickness direction of the side edge portion 800, the first surface 810 and the second surface 820 are defined in this embodiment as follows: the side edge portion 800 has two surfaces arranged in the thickness direction of the side edge portion 800, where the two surfaces are the first surface 810 and the second surface 820. In other words, the first surface 810 is the entirety of one surface of the side edge portion 800 arranged in the thickness direction of the side edge portion 800, not a portion of that surface. The same applies to the second surface 820.

When the first surface 810 is disposed opposite the second surface 820, because the second surface 820 is farther away from the protective means 400, the process of adhering the second adhesive member 200 to the second surface 820 is more convenient. Especially when the second adhesive member 200 is adhered by an automation device, the path along which the second adhesive member 200 is adhered to the second surface 820 does not interfere with the position of the protective means 400, which is more conducive to compilation of automation programs. Moreover, the first portion 210 of the second adhesive member 200 has a larger arrangement space and stronger adhesion force. In addition, when the second adhesive member 200 is bent so that the second portion 220 is adhered to the surface of the first combination portion 11 facing away from the second adhesive surface 120, the second adhesive member 200 also covers an end edge of the side edge portion 800, improving the sealing effect of the housing.

When the side edge portion 800 is the side edge out of which the first tab 500 extends, the side edge portion 800 includes an end edge located between the first surface 810 and the second surface 820, and the first tab 500 extends out of the end edge. A portion of the first tab 500 extending out of the end edge is an extension portion 510, and the extension portion 510 includes the second connection portion 511. The extension portion 510 is bent so that the second connection portion 511 is adhered to the second adhesive surface 120. The first connection portion 410 is connected to a surface of the second connection portion 511 facing away from the second adhesive surface 120. In this solution, the second connection portion 511 being adhered to the second adhesive surface 120 facilitates processing. This is because the step of adhering the second connection portion 511 to the second adhesive surface 120 can be completed in the process of processing the battery cell body, and this adhering step does not require the participation of the protective means 400. However, when the first connection portion 410 is adhered to the second adhesive portion and the second connection portion 511 is connected to the surface of the first connection portion 410 facing away from the second adhesive portion, the battery cell body must be adhered together with the protective means 400 in such adhering step, making the adhering process troublesome. In this case, to facilitate the electrical connection between the first connection portion 410 and the second connection portion 511, the two can be connected using a conductive adhesive. The conductive adhesive includes a conductive agent and an adhesive member, able to ensure current conduction between the first connection portion 410 and the second connection portion 511 while adhering the two.

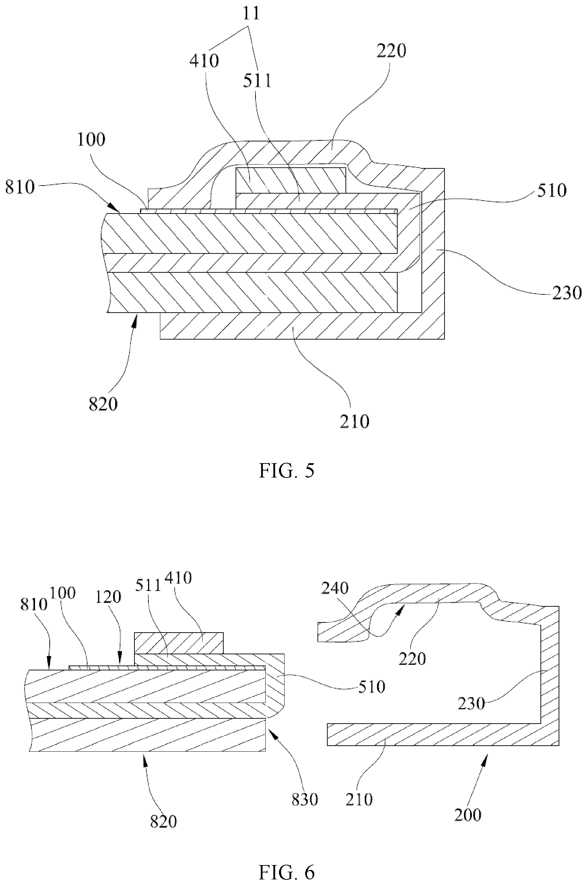

Referring to FIG. 5 to FIG. 7, the second adhesive member 200 includes a third portion 230, the third portion 230 having one end connected to the first portion 210 and another end connected to the second portion 220. In other words, the first portion 210 and the second portion 220 are indirectly connected via the third portion 230. In this embodiment, the third portion 230 is attached to the end edge of the side edge portion 800 or spaced apart from the end edge.

The applicant has found that the first tab 500 extends out of the end edge of the side edge portion 800 and is bent to be attached to the second adhesive surface 120. The third portion 230 of the second adhesive member 200 covers at least a portion of the end edge. Therefore, in an embodiment, the third portion 230 and the second portion 220 jointly cover the extension portion 510. In other words, in a length direction of the side edge portion 800, the extension portion 510 and the second adhesive member 200 may be bent at the same position of the side edge portion 800, so that the second adhesive member 200 can cover the extension portion 510 of the first tab 500. This structure allows the extension portion 510 to be protected by the second adhesive member 200, and prevents the extension portion 510 from coming into contact with other components to cause the problem of short circuit. This structure also allows the second adhesive member 200 to be bent from the second surface 820 to the first surface 810 at the shortest distance, improving the processing efficiency.

In an embodiment, the second portion 220 covers the first combination portion 11. This can improve the protective effect on the first combination portion 11. In a further embodiment, at least a portion of the second portion 220 is adhered to the second adhesive surface 120. In other words, a portion of the second portion 220 extending beyond the first combination portion 11 is adhered to the second adhesive surface 120. This can improve the protective effect of the second portion 220, and further prevent a second combination portion 12 from falling off the second adhesive surface 120.

The applicant has found that an adhesive area between the second adhesive member 200 and the second adhesive surface 120 directly affects adhesion stability between the two. To improve the adhesion stability of the second adhesive member 200, in an embodiment, in a direction from the body portion 430 to the first combination portion 11, the second portion 220 includes a first side edge facing away from the body portion 430 and a second side edge facing towards the body portion 430. In the direction from the body portion 430 to the first combination portion 11, the first combination portion 11 includes a third side edge facing away from the body portion 430 and a fourth side edge facing towards the body portion 430.

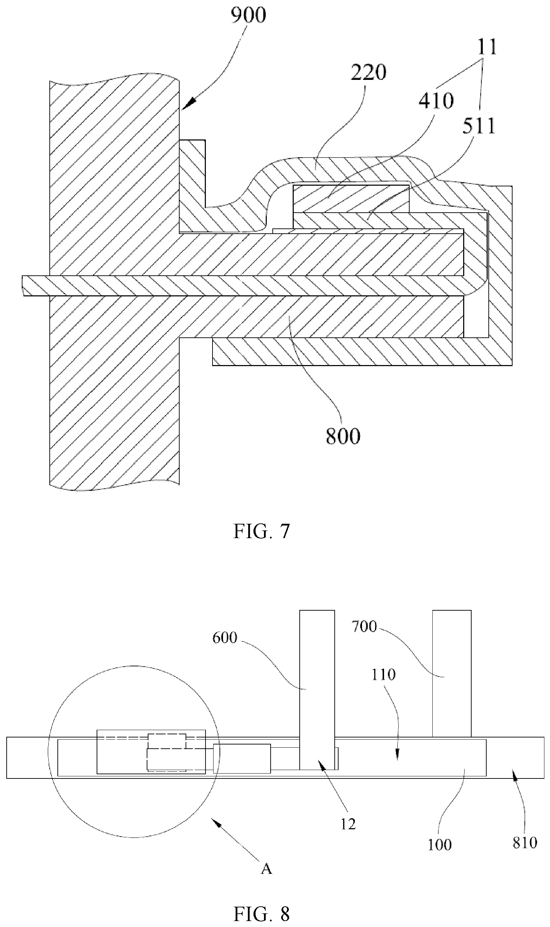

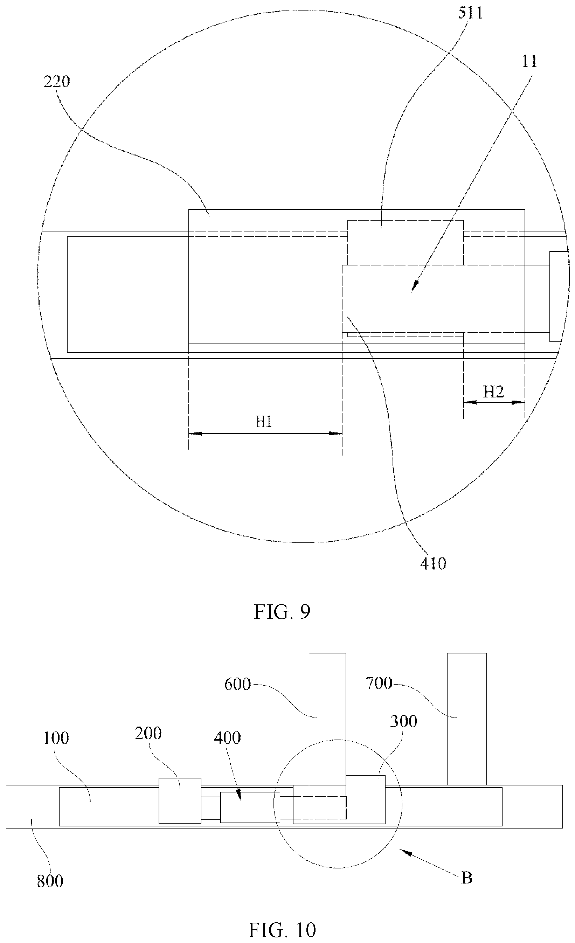

Referring to FIG. 8 and FIG. 9, in an embodiment, in the direction from the body portion 430 to the first combination portion 11, a distance H1 between the first side edge and the third side edge satisfies 7 mm ≤ H1 ≤ 12 mm (for example, H1 may be 7 mm, 8 mm, 9 mm, 10 mm, 11 mm, 12 mm, or the like), and a portion of the second adhesive member 200 extending beyond the first combination portion 11 is adhered to the second adhesive surface 120. In other words, in the direction from the body portion 430 to the first combination portion 11, on a side facing away from the first combination portion 11, length of the portion of the second adhesive member 200 extending beyond the first combination portion 11 is between 7 mm and 12 mm. The applicant has found that when H1 is less than 7 mm, the second adhesive member 200 has a poor adhering effect and is prone to fall off the second adhesive surface 120. When H1 is greater than 12 mm, this causes waste of materials, and also increases adhering difficulty. Therefore, 7 mm ≤ H1 ≤ 12 mm not only can ensure high adhesion stability of the second adhesive member 200, but also facilitate the adhering operation of the second adhesive member 200.

In another embodiment, in the direction from the body portion 430 to the first combination portion 11, a distance H2 between the second side edge and the fourth side edge satisfies 7 mm ≤ H2 ≤ 12 mm (for example, H2 may be 7 mm, 8 mm, 9 mm, 10 mm, 11 mm, 12 mm, or the like), and the portion of the second adhesive member 200 extending beyond the first combination portion 11 is adhered to the second adhesive surface 120. In other words, in the direction from the body portion 430 to the first combination portion 11, at a position between the first combination portion 11 and the body portion 430, the length of the portion of the second adhesive member 200 extending beyond the first combination portion 11 is between 7 mm and 12 mm. The applicant has found that when H2 is less than 7 mm, the second adhesive member 200 has a poor adhering effect and is prone to fall off the second adhesive surface 120. When H2 is greater than 12 mm, this causes waste of materials, and also increases adhering difficulty. Therefore, 7 mm ≤ H2 ≤ 12 mm not only can ensure high adhesion stability of the second adhesive member 200, but also facilitate the adhering operation of the second adhesive member 200.

In still another embodiment, 7 mm ≤ H1 ≤ 12 mm and 7 mm ≤ H2 ≤ 12 mm. This ensures that both a side of the first combination portion 11 facing towards the body portion 430 and a side of the first combination portion 11 facing away from the body portion 430 can be well and durably adhered and fixed.

Referring to FIG. 7, the housing further includes a third surface 900, where the third surface 900 is connected to a side edge of the first surface 810 facing away from the end edge, and the third surface 900 intersects with the first surface 810 at an angle, specifically at 90 degrees. The second portion 220 is bent to be adhered to the third surface 900. In this embodiment, after the second portion 220 is adhered to the third surface 900, the adhesion stability of the second adhesive member 200 can be further improved, and the coating effect on the first combination portion 11 can also be improved.

In an embodiment, in the direction from the body portion 430 to the first combination portion 11, the first adhesive member 100 includes a fifth side edge facing away from the body portion 430, the fifth side edge being located on a side of the first side edge facing away from the body portion 430. In this solution, the first side edge of the second adhesive member 200 is located in the second adhesive surface 120, such that the first side edge of the second adhesive member 200 is adhered to the second adhesive surface 120 of the first adhesive member 100, allowing the two to have higher adhesion stability and making them less likely to warp due to aging.

In a further embodiment, the protective means 400 further includes a third connection portion 420. The third connection portion 420 is electrically connected to a side of the body portion 430 facing away from the first connection portion 410, and the third connection portion 420 has a different polarity than the first connection portion 410. The battery 10 further includes an electrical connection portion 600, where the electrical connection portion 600 includes a fourth connection portion 610, and the fourth connection portion 610 is electrically connected to the third connection portion 420 and combined with the third connection portion 420 to form a second combination portion 12, the second combination portion 12 being adhered to the second adhesive surface 120. The electrical connection portion 600 is configured to be electrically connected to an external circuit to lead out electric energy in the battery cell to the external circuit. When one of temperature, voltage, or current of the battery cell is abnormal, the body portion 430 is short-circuited, making it impossible for the current to be conducted between the first connection portion 410 and the third connection portion 420, thereby making the current of the first tab 500 unable to be conducted to the electrical connection portion 600.

To ensure that the second combination portion 12 can also be protected, referring to FIG. 10 to FIG. 14, the battery 10 further includes a third adhesive member 300, where the third adhesive member 300 includes a fourth portion 310 and a fifth portion 320 connected to each other. The fourth portion 310 is adhered to the second surface 820, and the fifth portion 320 is adhered to a surface of the second combination portion 12 facing away from the first adhesive member 100. Similarly, the third adhesive member 300 may include only the fourth portion 310 and the fifth portion 320, or may also include another portion different from the fourth portion 310 and the fifth portion 320. When the third adhesive member 300 further includes another portion, the additional portion may be connected to a side of the fourth portion 310 facing away from the fifth portion 320, may be connected to a side of the fifth portion 320 facing away from the fourth portion 310, or may be connected between the fourth portion 310 and the fifth portion 320. In other words, the fourth portion 310 and the fifth portion 320 may not be directly connected, but are indirectly connected via the additional portion of the third adhesive member 300 other than the fourth portion 310 and the fifth portion 320. In this embodiment, the third adhesive member 300 is used to adhere the second combination portion 12, so that the second combination portion 12 is not prone to fall off the second adhesive surface 120. In addition, the fourth portion 310 of the third adhesive member 300 is adhered to the second surface 820, and the fifth portion 320 is adhered to the surface of the second combination portion 12 facing away from the first adhesive member 100, so that the third adhesive member 300 has higher adhering efficiency and better adhesion stability.

In a further embodiment, the fifth portion 320 covers the second combination portion 12. This allows the third adhesive member 300 to have better adhesion stability to the second combination portion 12, and can also improve the protective effect on the second combination portion 12.

Referring to FIG. 10 to FIG. 12, in a direction from the body portion 430 to the second combination portion 12, the fifth portion 320 includes a sixth side edge facing away from the body portion 430 and a seventh side edge facing towards the body portion 430. In the direction from the body portion 430 to the second combination portion 12, the second combination portion 12 includes an eighth side edge facing away from the body portion 430 and a ninth side edge facing towards the body portion 430. In an embodiment, in the direction from the body portion 430 to the second combination portion 12, a distance H3 between the sixth side edge and the eighth side edge satisfies 7 mm ≤ H3 ≤ 12 mm (for example, H3 may be 7 mm, 8 mm, 9 mm, 10 mm, 11 mm, 12 mm, or the like), and a portion of the third adhesive member 300 extending beyond the second combination portion 12 is adhered to the second adhesive surface 120. In other words, in the direction from the body portion 430 to the second combination portion 12, at a position of the second combination portion 12 facing away from the body portion 430, length of the portion of the third adhesive member 300 extending beyond the second combination portion 12 is between 7 mm and 12 mm. The applicant has found that when H3 is less than 7 mm, the third adhesive member 300 has a poor adhering effect and is prone to fall off the second adhesive surface 120. When H3 is greater than 12 mm, this causes waste of materials, and also increases adhering difficulty. Therefore, 7 mm ≤ H3 ≤ 12 mm not only can ensure high adhesion stability of the third adhesive member 300, but also facilitate the adhering operation of the third adhesive member 300.

In another embodiment, in the direction from the body portion 430 to the second combination portion 12, a distance H4 between the seventh side edge and the ninth side edge satisfies 7 mm ≤ H4 ≤ 12 mm (for example, H4 may be 7 mm, 8 mm, 9 mm, 10 mm, 11 mm, 12 mm, or the like), and the portion of the third adhesive member 300 extending beyond the second combination portion 12 is adhered to the second adhesive surface 120. In other words, in the direction from the second combination portion 12 to the body portion 430, at a position between the second combination portion 12 and the body portion 430, the length of the portion of the third adhesive member 300 extending beyond the second combination portion 12 is between 7 mm and 12 mm. The applicant has found that when H4 is less than 7 mm, the third adhesive member 300 has a poor adhering effect and is prone to fall off the second adhesive surface 120. When H4 is greater than 12 mm, this causes waste of materials, and also increases adhering difficulty. Therefore, 7 mm ≤ H4 ≤ 12 mm not only can ensure high adhesion stability of the third adhesive member 300, but also facilitate the adhering operation of the third adhesive member 300.

When the third adhesive member 300 is present, similarly, the housing further includes a third surface 900, where the third surface 900 is connected to a side edge of the first surface 810 facing away from the accommodating cavity, and the third surface 900 intersects with the first surface 810 at an angle. The fifth portion 320 is bent to be adhered to the third surface 900. In this embodiment, after the fifth portion 320 is adhered to the third surface 900, the adhesion stability of the third adhesive member 300 can be further improved, and the coating effect on the first combination portion 11 can also be improved.

In a further embodiment, in the direction from the body portion 430 to the second combination portion 12, the first adhesive member 100 includes a tenth side edge facing away from the body portion 430, the sixth side edge being located on a side of the tenth side edge facing away from the body portion 430. Such structure can further improve the adhesion stability to the second combination portion 12.

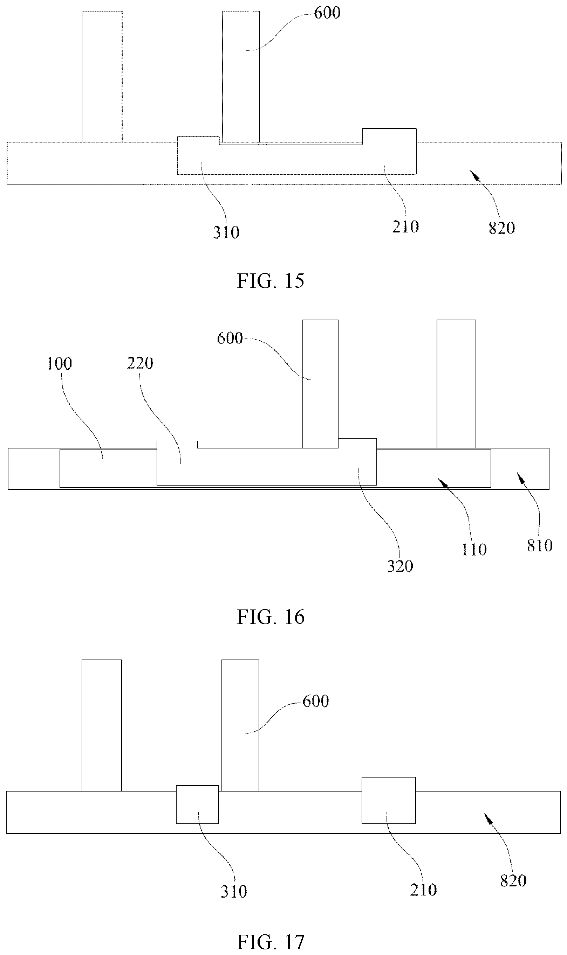

When both the first combination portion 11 and the second combination portion 12 are adhered to the second adhesive member 200, to reduce the adhering processes, referring to FIG. 15, in an embodiment, the first portion 210 is connected to the fourth portion 310, and the second adhesive member 200 and the third adhesive member 300 are integrally disposed. In this embodiment, the second adhesive member 200 and the third adhesive member 300 are the same component, so when the second adhesive member 200 is adhered to the second surface 820, the third adhesive member 300 is also adhered to the second surface 820. In addition, when the first portion 210 of the second adhesive member 200 and the fourth portion 310 of the third adhesive member 300 are an entirety, an adhesive area of the entirety formed by combining the second adhesive member 200 and the third adhesive member 300 on the second surface 820 can also be increased, improving the adhesion stability.

Referring to FIG. 16 and FIG. 17, in another embodiment, the second portion 220 of the second adhesive member 200 may be connected to the fifth portion 320 of the third adhesive member 300, and the second adhesive member 200 and the third adhesive member 300 are integrally disposed. In this solution, the second portion 220 of the second adhesive member 200 and the fifth portion 320 of the third adhesive member 300 are connected into an entirety, so that the protective means 400 can be more entirely covered. In addition, the second adhesive member 200 and the third adhesive member 300 can be adhered simultaneously, reducing the adhering processes and lowering the processing costs.

When the second portion 220 and the fifth portion 320 are an entirety, in an embodiment, the second portion 220 and the fifth portion 320 jointly cover the second adhesive surface 120. This improves the adhering effect of the second adhesive member 200 and the third adhesive member 300. In addition, the second adhesive surface 120 is entirely covered, and the adhesive surface of the first adhesive member 100 is not exposed, which slows down the decay of the adhesion force of the adhesive surface over time, prolonging service life of the first adhesive member 100.

When the second portion 220 and the fifth portion 320 jointly cover the second adhesive surface 120, a coverage area of the second portion 220 and the fifth portion 320 may be equal to or larger than an area of the second adhesive surface 120. In an embodiment, in a direction from the body portion 430 to the first combination portion 11, the second portion 220 extends beyond the first adhesive member 100. In a direction from the body portion 430 to the second combination portion 12, the fifth portion 320 extends beyond the first adhesive member 100. In this way, the second adhesive surface 120 is entirely covered, and the adhesive surface of the first adhesive member 100 is not exposed, which slows down the decay of the adhesion force of the adhesive surface over time, prolonging the service life of the first adhesive member 100.

A second aspect of this application further provides an electronic apparatus. The electronic apparatus includes the battery 10 according to any one of the foregoing embodiments.

It should be noted that the specification and accompanying drawings of this application provide preferred embodiments of this application. However, this application may be implemented in many different forms, and is not limited to some embodiments described in the specification. These embodiments should not be construed as additional limitations on the content of this application, and these embodiments are provided for a more thorough and comprehensive understanding of the disclosed content of this application. In addition, the foregoing technical features are further mutually combined to form various embodiments not listed above, and these embodiments are all construed as falling within the scope recorded in the specification of this application; and further, persons of ordinary skill in the art can make improvements or changes based on the foregoing descriptions, **as** far as these improvements and changes fall within the protection scope of the appended claims of this application.

## Claims

1. A battery (10), comprising:
a housing defining an accommodating cavity, wherein the housing comprises a first surface (810) and a second surface (820) located outside the accommodating cavity, and the first surface (810) is separated from the second surface (820);
a first adhesive member (100) comprising a first adhesive surface (110) and a second adhesive surface (120) disposed opposite to each other, wherein the first adhesive surface (110) is adhered to the first surface (810);
a protective means (400) adhered to the second adhesive surface (120), wherein the protective means (400) comprises a body portion (430) and a first connection portion (410) electrically connected to the body portion (430);
a first tab (500) comprising a second connection portion (511) located outside the accommodating cavity, wherein the second connection portion (511) is electrically connected to the first connection portion (410), and the second connection portion (511) and the first connection portion (410) are combined to form a first combination portion (11), the first combination portion being adhered to the second adhesive surface (120); and
a second adhesive member (200) comprising a first portion (210) and a second portion (220) connected to each other, wherein the first portion is adhered to the second surface (820), and the second portion is adhered to a surface of the first combination portion facing away from the first adhesive member (100).

2. The battery (10) according to claim 1, **characterized in that**
the housing comprises a side edge portion, wherein the side edge portion comprises the first surface (810) and the second surface (820); and in a thickness direction of the side edge portion, the first surface (810) is disposed opposite to the second surface (820).

3. The battery (10) according to claim 2, **characterized in that**
the side edge portion comprises an end edge located between the first surface (810) and the second surface (820), a portion of the first tab (500) extending out of the end edge is an extension portion (510), the extension portion (510) comprises the second connection portion (511), and the extension portion (510) is bent so that the second connection portion (511) is adhered to the second adhesive surface (120); and
the first connection portion (410) is connected to a surface of the second connection portion (511) facing away from the second adhesive surface (120).

4. The battery (10) according to claim 3, **characterized in that**
the second adhesive member (200) comprises a third portion, the third portion having one end connected to the first portion and another end connected to the second portion; and
the third portion is attached to the end edge or spaced apart from the end edge.

5. The battery (10) according to claim 4, **characterized in that**
the third portion and the second portion jointly cover the extension portion (510).

6. The battery (10) according to claim 5, **characterized in that**
the second portion covers the first combination portion.

7. The battery (10) according to claim 6, **characterized in that**
at least a portion of the second portion is adhered to the second adhesive surface (120).

8. The battery (10) according to claim 7, **characterized in that**
in a direction from the body portion (430) to the first combination portion, the second portion comprises a first side edge facing away from the body portion (430) and a second side edge facing towards the body portion (430);
in the direction from the body portion (430) to the first combination portion, the first combination portion comprises a third side edge facing away from the body portion (430) and a fourth side edge facing towards the body portion (430); and
in the direction from the body portion (430) to the first combination portion, a distance H1 between the first side edge and the third side edge satisfies 7 mm ≤ H1 ≤ 12 mm, and a portion of the second adhesive member (200) extending beyond the first combination portion is adhered to the second adhesive surface (120); and/or in the direction from the body portion (430) to the first combination portion, a distance H2 between the second side edge and the fourth side edge satisfies 7 mm ≤ H2 ≤ 12 mm, and the portion of the second adhesive member (200) extending beyond the first combination portion is adhered to the second adhesive surface (120).

9. The battery (10) according to claim 8, **characterized in that**
the housing further comprises a third surface, wherein the third surface is connected to a side edge of the first surface (810) facing away from the end edge, and the third surface intersects with the first surface (810) at an angle; and
the second portion is bent to be adhered to the third surface.

10. The battery (10) according to claim 8, **characterized in that**
in the direction from the body portion (430) to the first combination portion, the first adhesive member (100) comprises a fifth side edge facing away from the body portion (430), the fifth side edge being located on a side of the first side edge facing away from the body portion (430).

11. The battery (10) according to claim 1, **characterized in that**
the protective means (400) further comprises a third connection portion (420), wherein the third connection portion (420) is electrically connected to a side of the body portion (430) facing away from the first connection portion (410), and the third connection portion (420) has a different polarity than the first connection portion (410);
the battery (10) further comprises an electrical connection portion, wherein the electrical connection portion comprises a fourth connection portion, and the fourth connection portion is electrically connected to the third connection portion (420) and combined with the third connection portion (420) to form a second combination portion, the second combination portion being adhered to the second adhesive surface (120); and
the battery (10) further comprises a third adhesive member, wherein the third adhesive member comprises a fourth portion and a fifth portion connected to each other, the fourth portion is adhered to the second surface (820), and the fifth portion is adhered to a surface of the second combination portion facing away from the first adhesive member (100).

12. The battery (10) according to claim 11, **characterized in that**
the fifth portion covers the second combination portion.

13. The battery (10) according to claim 12, **characterized in that**
**in a direction** from the body portion (430) to the second combination portion, the fifth portion comprises a sixth side edge facing away from the body portion (430) and a seventh side edge facing towards the body portion (430);
in the direction from the body portion (430) to the second combination portion, the second combination portion comprises an eighth side edge facing away from the body portion (430) and a ninth side edge facing towards the body portion; and
in the direction from the body portion (430) to the second combination portion, a distance H3 between the sixth side edge and the eighth side edge satisfies 7 mm ≤ H3 ≤ 12 mm, and a portion of the third adhesive member extending beyond the second combination portion is adhered to the second adhesive surface (120); and/or in the direction from the body portion (430) to the second combination portion, a distance H4 between the seventh side edge and the ninth side edge satisfies 7 mm ≤ H4 ≤ 12 mm, and the portion of the third adhesive member extending beyond the second combination portion is adhered to the second adhesive surface (120).

14. The battery (10) according to claim 13, **characterized in that**
the housing further comprises a third surface, wherein the third surface is connected to a side edge of the first surface (810) facing away from the accommodating cavity, and the third surface intersects with the first surface (810) at an angle; and
the fifth portion is bent to be adhered to the third surface.

15. The battery (10) according to claim 13, **characterized in that**
in the direction from the body portion (430) to the second combination portion, the first adhesive member (100) comprises a tenth side edge facing away from the body portion (430), the sixth side edge being located on a side of the tenth side edge facing away from the body portion (430).

16. The battery (10) according to claim 11, **characterized in that**
the first portion is connected to the fourth portion, and the second adhesive member (200) and the third adhesive member are integrally disposed.

17. The battery (10) according to claim 11, **characterized in that**
the second portion is connected to the fifth portion, and the second adhesive member (200) and the third adhesive member are integrally disposed.

18. The battery (10) according to claim 17, **characterized in that**
the second portion and the fifth portion jointly cover the second adhesive surface (120).

19. The battery (10) according to claim 17, **characterized in that**
in a direction from the body portion (430) to the first combination portion, the second portion extends beyond the first adhesive member (100); and
in a direction from the body portion (430) to the second combination portion, the fifth portion extends beyond the first adhesive member (100).

20. An electronic apparatus, comprising the battery (10) according to any one of claims 1 to 19.

## Patentansprüche

1. Batterie (10), umfassend:
ein Gehäuse, das einen Aufnahmeraum definiert, wobei das Gehäuse eine erste Oberfläche (810) und eine zweite Oberfläche (820) aufweist, die außerhalb des Aufnahmeraums angeordnet sind, und die erste Oberfläche (810) von der zweiten Oberfläche (820) getrennt ist;
ein erstes Klebeelement (100), das eine erste Klebefläche (110) und eine zweite Klebefläche (120) umfasst, die einander gegenüberliegend angeordnet sind, wobei die erste Klebefläche (110) an der ersten Oberfläche (810) haftet;
eine Schutzeinrichtung (400), die an der zweiten Klebefläche (120) haftet, wobei die Schutzeinrichtung (400) einen Körperabschnitt (430) und einen ersten Verbindungsabschnitt (410) umfasst, der elektrisch mit dem Körperabschnitt (430) verbunden ist;
eine erste Lasche (500), die einen zweiten Verbindungsabschnitt (511) umfasst, der sich außerhalb des Aufnahmeraums befindet, wobei der zweite Verbindungsabschnitt (511) elektrisch mit dem ersten Verbindungsabschnitt (410) verbunden ist und der zweite Verbindungsabschnitt (511) und der erste Verbindungsabschnitt (410) zu einem ersten Kombinationsabschnitt (11) zusammengefügt sind, wobei der erste Kombinationsabschnitt an der zweiten Klebefläche (120) befestigt ist; und
ein zweites Klebeelement (200), das einen ersten Abschnitt (210) und einen zweiten Abschnitt (220) umfasst, die miteinander verbunden sind, wobei der erste Abschnitt an der zweiten Oberfläche (820) haftet und der zweite Abschnitt an einer Oberfläche des ersten Kombinationsabschnitts haftet, die vom ersten Klebeelement (100) weg zeigt.

2. Batterie (10) nach Anspruch 1, **dadurch gekennzeichnet, dass**
das Gehäuse einen Seitenrandabschnitt umfasst, wobei der Seitenrandabschnitt die erste Oberfläche (810) und die zweite Oberfläche (820) umfasst; und in einer Dickenrichtung des Seitenrandabschnitts die erste Oberfläche (810) der zweiten Oberfläche (820) gegenüberliegend angeordnet ist.

3. Batterie (10) nach Anspruch 2, **dadurch gekennzeichnet, dass**
der Seitenrandabschnitt einen Endrand umfasst, der zwischen der ersten Oberfläche (810) und der zweiten Oberfläche (820) angeordnet ist, ein aus dem Endrand herausragender Abschnitt der ersten Lasche (500) ein Verlängerungsabschnitt (510) ist, der Verlängerungsabschnitt (510) den zweiten Verbindungsabschnitt (511) umfasst, und der Verlängerungsabschnitt (510) so gebogen ist, dass der zweite Verbindungsabschnitt (511) an der zweiten Klebefläche (120) haftet; und
der erste Verbindungsabschnitt (410) mit einer von der zweiten Klebefläche (120) abgewandten Fläche des zweiten Verbindungsabschnitts (511) verbunden ist.

4. Batterie (10) nach Anspruch 3, **dadurch gekennzeichnet, dass**
das zweite Klebeelement (200) einen dritten Abschnitt umfasst, wobei der dritte Abschnitt mit einem Ende mit dem ersten Abschnitt und mit einem anderen Ende mit dem zweiten Abschnitt verbunden ist; und
der dritte Abschnitt an dem Endrand befestigt ist oder von dem Endrand beabstandet ist.

5. Batterie (10) nach Anspruch 4, **dadurch gekennzeichnet, dass**
der dritte Abschnitt und der zweite Abschnitt gemeinsam den Verlängerungsabschnitt (510) abdecken.

6. Batterie (10) nach Anspruch 5, **dadurch gekennzeichnet, dass**
der zweite Abschnitt den ersten Kombinationsabschnitt abdeckt.

7. Batterie (10) nach Anspruch 6, **dadurch gekennzeichnet, dass**
mindestens ein Teil des zweiten Abschnitts an der zweiten Klebefläche (120) haftet.

8. Batterie (10) nach Anspruch 7, **dadurch gekennzeichnet, dass**
in einer Richtung vom Körperabschnitt (430) zum ersten Kombinationsabschnitt der zweite Abschnitt eine erste Seitenkante, die vom Körperabschnitt (430) weg zeigt, und eine zweite Seitenkante, die zum Körperabschnitt (430) hin zeigt, aufweist;
in Richtung vom Körperabschnitt (430) zum ersten Kombinationsabschnitt der erste Kombinationsabschnitt eine dritte Seitenkante umfasst, die vom Körperabschnitt (430) weg zeigt, und eine vierte Seitenkante, die zum Körperabschnitt (430) hin zeigt; und
in Richtung vom Körperabschnitt (430) zum ersten Kombinationsabschnitt ein Abstand H1 zwischen der ersten Seitenkante und der dritten Seitenkante die Bedingung 7 mm ≤ H1 ≤ 12 mm erfüllt, und ein über den ersten Kombinationsabschnitt hinausragender Abschnitt des zweiten Klebeelements (200) an der zweiten Klebefläche (120) befestigt ist; und/oder in Richtung vom Körperabschnitt (430) zum ersten Kombinationsabschnitt ein Abstand H2 zwischen der zweiten Seitenkante und der vierten Seitenkante die Bedingung 7 mm ≤ H2 ≤ 12 mm erfüllt, und der über den ersten Kombinationsabschnitt hinausragende Abschnitt des zweiten Klebeelements (200) an der zweiten Klebefläche (120) befestigt ist.

9. Batterie (10) nach Anspruch 8, **dadurch gekennzeichnet, dass**
das Gehäuse ferner eine dritte Fläche umfasst, wobei die dritte Fläche mit einer von dem Endrand abgewandten Seitenkante der ersten Fläche (810) verbunden ist und die dritte Fläche die erste Fläche (810) in einem Winkel schneidet; und
der zweite Abschnitt so gebogen ist, dass er an der dritten Fläche haftet.

10. Batterie (10) nach Anspruch 8, **dadurch gekennzeichnet, dass**
in Richtung vom Körperabschnitt (430) zum ersten Kombinationsabschnitt das erste Klebeelement (100) eine fünfte Seitenkante aufweist, die vom Körperabschnitt (430) weg zeigt, wobei sich die fünfte Seitenkante auf einer Seite der ersten Seitenkante befindet, die vom Körperabschnitt (430) weg zeigt.

11. Batterie (10) nach Anspruch 1, **dadurch gekennzeichnet, dass**
die Schutzeinrichtung (400) ferner einen dritten Verbindungsabschnitt (420) umfasst, wobei der dritte Verbindungsabschnitt (420) elektrisch mit einer Seite des Körperabschnitts (430) verbunden ist, die vom ersten Verbindungsabschnitt (410) weg zeigt, und der dritte Verbindungsabschnitt (420) eine andere Polarität als der erste Verbindungsabschnitt (410) aufweist;
die Batterie (10) ferner einen elektrischen Verbindungsabschnitt umfasst, wobei der elektrische Verbindungsabschnitt einen vierten Verbindungsabschnitt umfasst und der vierte Verbindungsabschnitt elektrisch mit dem dritten Verbindungsabschnitt (420) verbunden und mit dem dritten Verbindungsabschnitt (420) zu einem zweiten Kombinationsabschnitt zusammengefügt ist, wobei der zweite Kombinationsabschnitt an der zweiten Klebefläche (120) befestigt ist; und
die Batterie (10) ferner ein drittes Klebeelement umfasst, wobei das dritte Klebeelement einen vierten Abschnitt und einen fünften Abschnitt umfasst, die miteinander verbunden sind, der vierte Abschnitt an der zweiten Oberfläche (820) haftet und der fünfte Abschnitt an einer Oberfläche des zweiten Kombinationsabschnitts haftet, die vom ersten Klebeelement (100) abgewandt ist.

12. Batterie (10) nach Anspruch 11, **dadurch gekennzeichnet, dass**
der fünfte Abschnitt den zweiten Kombinationsabschnitt bedeckt.

13. Batterie (10) nach Anspruch 12, **dadurch gekennzeichnet, dass**
in einer Richtung vom Körperabschnitt (430) zum zweiten Kombinationsabschnitt der fünfte Abschnitt eine sechste Seitenkante, die vom Körperabschnitt (430) weg zeigt, und eine siebte Seitenkante, die zum Körperabschnitt (430) hin zeigt, umfasst;
in Richtung vom Körperabschnitt (430) zum zweiten Kombinationsabschnitt der zweite Kombinationsabschnitt eine achte Seitenkante, die vom Körperabschnitt (430) weg zeigt, und eine neunte Seitenkante, die zum Körperabschnitt hin zeigt, umfasst; und
in Richtung vom Körperabschnitt (430) zum zweiten Kombinationsabschnitt ein Abstand H3 zwischen der sechsten Seitenkante und der achten Seitenkante die Bedingung 7 mm ≤ H3 ≤ 12 mm erfüllt, und ein über den zweiten Kombinationsabschnitt hinausragender Abschnitt des dritten Klebeelements an der zweiten Klebefläche (120) befestigt ist; und/oder in Richtung vom Körperabschnitt (430) zum zweiten Kombinationsabschnitt ein Abstand H4 zwischen der siebten Seitenkante und der neunten Seitenkante die Bedingung 7 mm ≤ H4 ≤ 12 mm erfüllt, und der über den zweiten Kombinationsabschnitt hinausragende Abschnitt des dritten Klebeelements an der zweiten Klebefläche (120) befestigt ist.

14. Batterie (10) nach Anspruch 13, **dadurch gekennzeichnet, dass**
das Gehäuse ferner eine dritte Fläche umfasst, wobei die dritte Fläche mit einer von dem Aufnahmeraum abgewandten Seitenkante der ersten Fläche (810) verbunden ist und die dritte Fläche die erste Fläche (810) in einem Winkel schneidet; und
der fünfte Abschnitt so gebogen ist, dass er an der dritten Fläche haftet.

15. Batterie (10) nach Anspruch 13, **dadurch gekennzeichnet, dass**
in Richtung vom Körperabschnitt (430) zum zweiten Kombinationsabschnitt das erste Klebeelement (100) eine zehnte Seitenkante aufweist, die vom Körperabschnitt (430) weg zeigt, wobei sich die sechste Seitenkante auf einer Seite der zehnten Seitenkante befindet, die vom Körperabschnitt (430) weg zeigt.

16. Batterie (10) nach Anspruch 11, **dadurch gekennzeichnet, dass**
der erste Abschnitt mit dem vierten Abschnitt verbunden ist und das zweite Klebeelement (200) und das dritte Klebeelement einstückig angeordnet sind.

17. Batterie (10) nach Anspruch 11, **dadurch gekennzeichnet, dass**
der zweite Abschnitt mit dem fünften Abschnitt verbunden ist und das zweite Klebeelement (200) und das dritte Klebeelement einstückig angeordnet sind.

18. Batterie (10) nach Anspruch 17, **dadurch gekennzeichnet, dass**
der zweite Abschnitt und der fünfte Abschnitt gemeinsam die zweite Klebefläche (120) bedecken.

19. Batterie (10) nach Anspruch 17, **dadurch gekennzeichnet, dass**
sich der zweite Abschnitt in einer Richtung vom Körperabschnitt (430) zum ersten Kombinationsabschnitt über das erste Klebeelement (100) hinaus erstreckt; und
sich der fünfte Abschnitt in einer Richtung vom Körperabschnitt (430) zum zweiten Kombinationsabschnitt über das erste Klebeelement (100) hinaus erstreckt.

20. Elektronisches Gerät, das die Batterie (10) gemäß einem der Ansprüche 1 bis 19 umfasst.

## Revendications

1. Batterie (10), comprenant :
un boîtier définissant une cavité de logement, dans lequel le boîtier comprend une première surface (810) et une deuxième surface (820) situées à l'extérieur de la cavité de logement, et la première surface (810) est séparée de la deuxième surface (820) ;
un premier élément adhésif (100) comprenant une première surface adhésive (110) et une deuxième surface adhésive (120) disposées en vis-à-vis l'une de l'autre, la première surface adhésive (110) étant collée à la première surface (810) ;
un moyen de protection (400) collé à la deuxième surface adhésive (120), dans lequel le moyen de protection (400) comprend une partie de corps (430) et une première partie de connexion (410) connectée électriquement à la partie de corps (430) ;
une première languette (500) comprenant une deuxième partie de connexion (511) située à l'extérieur de la cavité de logement, dans laquelle la deuxième partie de connexion (511) est connectée électriquement à la première partie de connexion (410), et la deuxième partie de connexion (511) et la première partie de connexion (410) sont combinées pour former une première partie combinée (11), la première partie combinée étant collée à la deuxième surface adhésive (120) ; et
un deuxième élément adhésif (200) comprenant une première partie (210) et une deuxième partie (220) reliées l'une à l'autre, dans lequel la première partie est collée à la deuxième surface (820), et la deuxième partie est collée à une surface de la première partie combinée opposée au premier élément adhésif (100).

2. Batterie (10) selon la revendication 1, **caractérisée en ce que**
le boîtier comprend une partie de bord latéral, dans laquelle la partie de bord latéral comprend la première surface (810) et la deuxième surface (820) ; et dans le sens de l'épaisseur de la partie de bord latéral, la première surface (810) est disposée à l'opposé de la deuxième surface (820).

3. Batterie (10) selon la revendication 2, **caractérisée en ce que**
la partie de bord latéral comprend un bord d'extrémité situé entre la première surface (810) et la deuxième surface (820), une partie de la première languette (500) s'étendant hors du bord d'extrémité est une partie d'extension (510), la partie d'extension (510) comprend la deuxième partie de connexion (511), et la partie d'extension (510) est pliée de telle sorte que la deuxième partie de connexion (511) adhère à la deuxième surface adhésive (120) ; et
la première partie de connexion (410) est reliée à une surface de la deuxième partie de connexion (511) tournée à l'opposé de la deuxième surface adhésive (120).

4. Batterie (10) selon la revendication 3, **caractérisée en ce que**
le deuxième élément adhésif (200) comprend une troisième partie, dont une extrémité est reliée à la première partie et l'autre extrémité à la deuxième partie ; et
la troisième partie est fixée au bord d'extrémité ou espacée de celui-ci.

5. Batterie (10) selon la revendication 4, **caractérisée en ce que**
la troisième partie et la deuxième partie recouvrent conjointement la partie d'extension (510).

6. Batterie (10) selon la revendication 5, **caractérisée en ce que**
la deuxième partie recouvre la première partie combinée.

7. Batterie (10) selon la revendication 6, **caractérisée en ce que**
au moins une partie de la deuxième partie est collée à la deuxième surface adhésive (120).

8. Batterie (10) selon la revendication 7, **caractérisée en ce que**
dans une direction allant de la partie de corps (430) vers la première partie combinée, la deuxième partie comprend un premier bord latéral tourné à l'opposé de la partie de corps (430) et un deuxième bord latéral tourné vers la partie de corps (430) ;
dans la direction allant de la partie de corps (430) vers la première partie combinée, la première partie combinée comprend un troisième bord latéral tourné à l'opposé de la partie de corps (430) et un quatrième bord latéral tourné vers la partie de corps (430) ; et
dans la direction allant de la partie de corps (430) vers la première partie combinée, une distance H1 entre le premier bord latéral et le troisième bord latéral satisfait à la relation 7 mm ≤ H1 ≤ 12 mm, et une partie de l'élément adhésif (200) s'étendant au-delà de la première partie combinée est collée à la deuxième surface adhésive (120) ; et/ou dans la direction allant de la partie de corps (430) vers la première partie combinée, une distance H2 entre le deuxième bord latéral et le quatrième bord latéral satisfait à 7 mm ≤ H2 ≤ 12 mm, et la partie de l'élément adhésif (200) s'étendant au-delà de la première partie combinée est collée à la deuxième surface adhésive (120).

9. Batterie (10) selon la revendication 8, **caractérisée en ce que**
le boîtier comprend en outre une troisième surface, dans laquelle la troisième surface est reliée à un bord latéral de la première surface (810) opposé au bord d'extrémité, et la troisième surface coupe la première surface (810) selon un angle ; et
la deuxième partie est pliée pour être collée à la troisième surface.

10. Batterie (10) selon la revendication 8, **caractérisée en ce que**
dans la direction allant de la partie de corps (430) vers la première partie combinée, le premier élément adhésif (100) comprend un cinquième bord latéral opposé à la partie de corps (430), le cinquième bord latéral étant situé sur un côté du premier bord latéral opposé à la partie de corps (430).

11. Batterie (10) selon la revendication 1, **caractérisée en ce que**
le moyen de protection (400) comprend en outre une troisième partie de connexion (420), dans laquelle la troisième partie de connexion (420) est connectée électriquement à un côté de la partie de corps (430) opposé à la première partie de connexion (410), et la troisième partie de connexion (420) a une polarité différente de celle de la première partie de connexion (410) ;
batterie (10) comprend en outre une partie de connexion électrique, dans laquelle ladite partie de connexion électrique comprend une quatrième partie de connexion, et ladite quatrième partie de connexion est reliée électriquement à la troisième partie de connexion (420) et combinée avec celle-ci pour former une deuxième partie combinée, ladite deuxième partie combinée étant collée à la deuxième surface adhésive (120) ; et
batterie (10) comprend en outre un troisième élément adhésif, dans lequel le troisième élément adhésif comprend une quatrième partie et une cinquième partie reliées l'une à l'autre, la quatrième partie est collée à la deuxième surface (820), et la cinquième partie est collée à une surface de la deuxième partie combinée opposée au premier élément adhésif (100).

12. Batterie (10) selon la revendication 11, **caractérisée en ce que**
la cinquième partie recouvre la deuxième partie combinée.

13. Batterie (10) selon la revendication 12, **caractérisée en ce que**
dans une direction allant de la partie de corps (430) vers la deuxième partie combinée, la cinquième partie comprend un sixième bord latéral tourné à l'opposé de la partie de corps (430) et un septième bord latéral tourné vers la partie de corps (430) ;
dans la direction allant de la partie de corps (430) vers la deuxième partie combinée, la deuxième partie combinée comprend un huitième bord latéral tourné à l'opposé de la partie de corps (430) et un neuvième bord latéral tourné vers la partie de corps ; et
dans la direction allant de la partie de corps (430) vers la deuxième partie combinée, une distance H3 entre le sixième bord latéral et le huitième bord latéral satisfait à la relation 7 mm ≤ H3 ≤ 12 mm, et une partie du troisième élément adhésif s'étendant au-delà de la deuxième partie combinée est collée à la deuxième surface adhésive (120) ; et/ou dans la direction allant de la partie de corps (430) vers la deuxième partie combinée, une distance H4 entre le septième bord latéral et le neuvième bord latéral satisfait à la relation 7 mm ≤ H4 ≤ 12 mm, et la partie de l'élément adhésif tiers s'étendant au-delà de la deuxième partie combinée est collée à la deuxième surface adhésive (120).

14. Batterie (10) selon la revendication 13, **caractérisée en ce que**
le boîtier comprend en outre une troisième surface, dans laquelle la troisième surface est reliée à un bord latéral de la première surface (810) tourné à l'opposé de la cavité de logement, et la troisième surface coupe la première surface (810) selon un angle ; et
la cinquième partie est pliée pour être collée à la troisième surface.

15. Batterie (10) selon la revendication 13, **caractérisée en ce que**
dans la direction allant de la partie de corps (430) vers la deuxième partie combinée, le premier élément adhésif (100) comprend un dixième bord latéral tourné à l'opposé de la partie de corps (430), le sixième bord latéral étant situé sur un côté du dixième bord latéral tourné à l'opposé de la partie de corps (430).

16. Batterie (10) selon la revendication 11, **caractérisée en ce que**
la première partie est reliée à la quatrième partie, et le deuxième élément adhésif (200) et le troisième élément adhésif sont disposés d'un seul tenant.

17. Batterie (10) selon la revendication 11, **caractérisée en ce que**
la deuxième partie est reliée à la cinquième partie, et le deuxième élément adhésif (200) et le troisième élément adhésif sont disposés d'un seul tenant.

18. Batterie (10) selon la revendication 17, **caractérisée en ce que**
la deuxième partie et la cinquième partie recouvrent conjointement la deuxième surface adhésive (120).

19. Batterie (10) selon la revendication 17, **caractérisée en ce que**
dans une direction allant de la partie de corps (430) vers la première partie combinée, la deuxième partie s'étend au-delà du premier élément adhésif (100) ; et
dans une direction allant de la partie de corps (430) vers la deuxième partie combinée, la cinquième partie s'étend au-delà du premier élément adhésif (100).

20. Appareil électronique comprenant batterie (10) selon l'une quelconque des revendications 1 à 19.
